# EUROPÄISCHE PATENTSCHRIFT

(11) **EP 0 638 575 B1**
(45) Veröffentlichungstag und Bekanntmachung des Hinweises auf die Patenterteilung: **27.01.1999**
(21) Anmeldenummer: 94111674.1
(22) Anmeldetag: 05.06.1989
(51) Int. Cl.: C07F 7/18

(54) **Verfahren zur Herstellung von Diorganodialkoxysilanen**
Method for the preparation of diorganodialkoxysilanes
Procédé de préparation de diorganodialcoxysilanes

(30) Priorität: 25.06.1988 DE 3821483
(43) Veröffentlichungstag der Anmeldung: 15.02.1995
(62) Teilanmeldung aus: 89110116.4
(73) Patentinhaber: Witco GmbH, 59192 Bergkamen (DE)
(72) Erfinder: Graefe, Jürgen, Dr., D-83308 Trostberg (DE); Uzick, Wolfram, Dr., D-58239 Schwerte (DE); Weinberg, Udo, D-59192 Bergkamen (DE)

(56) Entgegenhaltungen:
- LU-A- 28 740
- US-A- 4 777 278
- - Chem. Abstr., Vol. 56 (1962), abstract no. 7344h, Chrzczonowicz et al. Bifunctional silicone monomers-hydrolysis and condensation. III. (Roczniki Chem., Vol. 34, 1667 - 74 (1960)).
- - Derwent Abstr. no. 86-012186 (DW8602) of SU-A-726 825 (V. V. Vavilov).

## Beschreibung

Die Erfindung betrifft ein Verfahren zur selektiven Herstellung von Dicycloalkyldialkoxysilanen der allgemeinen Formel 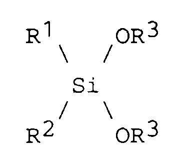 worin R¹ und R² Cycloalkylgruppen mit 3 bis 10 C-Atomen, R³ Alkylgruppen mit 1 - 5 C-Atomen, wobei die Reste R³ gleich oder verschieden sein können, durch gleichzeitige Umsetzung von Tetraalkoxysilanen der allgemeinen Formel Si(OR³)₄ und/oder Monoorganotri-alkoxysilanen der allgemeinen Formel R¹Si(OR³)₃, worin R¹ ein Cycloalkylrest ist mit Verbindungen der allgemeinen Formel R²-X, worin X = Cl, Br, J ist und Magnesium.

Disubstituierte Dialkoxysilane der allgemeinen Struktur R₂Si(OR)₂ werden unter anderem als Stereomodifier in Katalysatoren zur Herstellung von Polypropylen (PP) eingesetzt (EP-A-0 231 878). Vorteilhaft sind dabei disubstituierte Dialkoxysilane der Formel R¹R²Si(OR³)₂, insbesondere solche mit verzweigten Alkylresten R¹ und R² (EP-A-0 250 229 und DE-A-36 29 932).

Es ist seit längerer Zeit bekannt, daß disubstituierte Dialkoxysilane R¹R²Si(OR³)₂ durch Alkylierung oder Arylierung von Tetraalkoxysilanen bzw. vereinzelt auch von monosubstituierten Trialkoxysilanen mit Gridnard-Verbindungen hergestellt werden können (Houben-Weyl, Methoden der Organischen Chemie, XIII/5, 180 ff).

Als Reaktionsprodukte werden jedoch in der Regel Gemische von Diorganodialkoxysilanen mit Monoorganotrialkoxysilanen und/oder Triorganomonoalkoxysilanen erhalten, so daß zur Isolierung der gewünschten Diorganodialkoxysilane nachfolgend eine Trennoperation erforderlich ist und damit bei erhöhten Herstellungskosten eine relativ geringe Ausbeute in Kauf genommen werden muß (Z. Lasocki, Bull. Acad, Polon. Sci., Ser. Sci Chim. 12 (5), 281 - 287 (19964)).

Es wurde nun überraschend gefunden, daß durch gleichzeitige Umsetzung von Tetraalkoxysilanen der allgemeinen Formel Si(OR³)₄ und/oder Monoorganotrialkoxysilanen der allgemeinen Formel R¹Si(OR³)₃, worin R¹ ein Cycloalkylrest ist mit Verbindungen der allgemeinen Formel R²-X, worin X = Cl, Br, J ist und Magnesium, Diorganodialkoxysilane R¹R²Si(OR³)₂ mit hoher Selektivität in hoher Ausbeute zugänglich sind.

Bevorzugt sind dabei für die Reste R¹ und R² Cycloalkylgruppen mit 5 bis 7 C-Atomen, insbesondere gegebenenfalls substituierte Cyclopentylgruppen, und für den Rest R³ Methyl- oder Ethylgruppen.

Die Umsetzung wird vorteilhaft bei Temperaturen von etwa 0 °C bis 90 °C durchgeführt.

Als Lösungsmittel kommen insbesondere Dialkylether in Frage, die aufgrund ihrer physikalischen Eigenschaften in dem genannten Temperaturbereich verwendbar sind.

Der Siedepunkt des Lösungsmittels sollte einerseits nicht zu niedrig sein und in einem solchen Bereich liegen, daß die Umsetzungstemperatur problemlos eingehalten werden kann, andererseits aber auch nicht so hoch sein, daß die Entfernung des Lösungsmittels aus dem Umsetzungsprodukt Schwierigkeiten bereitet. Besonders geeignet sind für das erfindungsgemäße Verfahren Dialkylether, wie Diethylether und insbesondere Methyl-tert.-butylether.

Die ansonsten für Grignard-Reaktion vielfach verwendeten cyclischen Ether Tetrahydrofuran oder 1,4-Dioxan haben sich für das erfindungsgemäße Verfahren als weniger geeignet herausgestellt.

Die Herstellung von Diorganodialkoxysilanen erfolgt in Anlehnung an eine prinzipiell bekannte Vorgehensweise (Chemical Abstracts 32,7892; 105, 134116 n; 105, 134117 p, Columbus Ohio (USA), bei der auf die separate Herstellung der Grignard-Verbindung R²MgX verzichtet und das Monoorganotrialkoxysilan R¹Si(OR³)₃ bzw. Tetraalkoxysilan Si(OR³)₄ in Gegenwart eines geeigneten Lösungsmittels direkt mit metallischem Magnesium und einem Organohalogenid R²X umgesetzt wird.

### Beispiele

### Beispiel 1

### Dicyclopentyldimethoxysilan

Unter Schutzgas wurden 24,1 g Magnesiumspäne (= 0,99 mol) mit ca. 10 ml tert.-Butyl-methylether überschichtet und einem Jod-Kristall versetzt. Anschließend wurden 4,6 g Cyclopentylchlorid (= 44 mmol) zudosiert. Nach Anspringen der Reaktion wurde eine Lösung von 100 g Cyclopentylchlorid (= 0,96 mol) und 67 g Tetramethoxysilan (= 0,44 mol) in 150 ml tert.-Butyl-methylether innerhalb von 3 h bei einer Temperatur von 54 - 61 °C (gelinder Rückfluß der Reaktionslösung) zugetropft.

Nach Beendigung der Zugabe ließ man noch 4 h unter Rückfluß nachreagieren, versetzte nach Abkühlen des Reaktionsgemisches mit 9,6 g Methanol (= 0,3 mol), ließ einige Minuten nachrühren und filtrierte vom ausgefallenen Feststoff ab.

Der Filterkuchen wurde mit mehreren Portionen tert.-Butylmethylether gewaschen.

Am Rotationsverdampfer wurden die vereinigten Filtrate bis 50 mbar/70 °C vom Lösungsmittel befreit.

Anschließend wurde bis zu einem Druck von 5 mbar und einer Temperatur von 70 °C andestilliert.

Es verblieben 97,5 g (= 97 % der Theorie) an Dicyclopentyldimethoxysilan, welches gemäß GC eine Reinheit von 99,4 % aufwies.

## Patentansprüche

1. Verfahren zur selektiven Herstellung von Dicycloalkyldialkoxysilanen der allgemeinen Formel 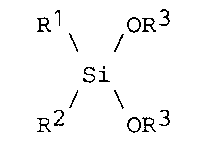 worin R¹ und R² Cycloalkylgruppen mit 3 bis 10 C-Atomen, R³ Alkylgruppen mit 1 - 5 C-Atomen, wobei die Reste R³ gleich oder verschieden sein können, sind, durch gleichzeitige Umsetzung von Tetraalkoxysilanen der allgemeinen Formel Si(OR³)₄ und/oder Monoorganotrialkoxysilanen der allgemeinen Formel R¹Si(OR³)₃, worin R¹ ein Cycloalkylrest ist mit Verbindungen der allgemeinen Formel R²-X, worin X = Cl, Br, J ist und Magnesium.

2. Verfahren gemäß Anspruch 1, dadurch gekennzeichnet, daß R¹ und R² gleiche oder verschiedene Cycloalkylgruppen mit 5 bis 7 C-Atomen sind.

## Claims

1. Process for the selective preparation of dicycloalkyldialkoxysilanes of the general formula 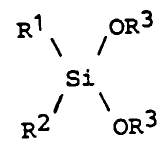 in which R¹ and R² are cycloalkyl groups having from 3 to 10 carbon atoms, and R³ are alkyl groups having 1 - 5 carbon atoms, it being possible for the radicals R³ to be identical or different, by simultaneously reacting tetraalkoxysilanes of the general formula Si(OR³)₄ and/or monoorganotrialkoxysilanes of the general formula R¹Si(OR³)₃, in which R¹ is a cycloalkyl radical, with compounds of the general formula R²-X, in which X = Cl, Br or I, and magnesium.

2. Process according to Claim 1, characterized in that R¹ and R² are identical or different cycloalkyl groups having from 5 to 7 carbon atoms.

## Revendications

1. Procédé de préparation sélective de dicycloalkyldialkoxysilanes de formule générale 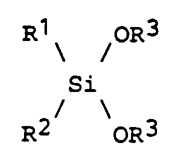 dans laquelle R¹ et R² peuvent être des radicaux cycloalkyle de 3 à 10 atomes de carbone, R³ des radicaux alkyle de 1 à 5 atomes de carbone, les radicaux R³ pouvant être identiques ou différents, par réaction simultanée de tétra-alkoxysilanes de formule générale Si(OR³)₄ et/ou de monoorganotrialkoxysilanes de formule générale R¹Si(OR³)₃, dans laquelle R¹ est un radical cycloalkyle, avec des composés de formule générale R²-X dans laquelle X = Cl, Br, I et du magnésium.

2. Procédé selon la revendication 1, caractérisé en ce que R¹ et R² sont des radicaux cycloalkyle identiques ou différents, de 5 à 7 atomes de carbone.
